# EUROPEAN PATENT APPLICATION

(11) **EP 4 253 580 A1**
(43) Date of publication of application: **04.10.2023**
(21) Application number: 21897704.9
(22) Date of filing: 09.11.2021
(51) Int. Cl.: C22C 11/06, C22F 1/00, C22F 1/12, H01M 4/14, H01M 4/68

(54) **LEAD ALLOY, LEAD STORAGE BATTERY ELECTRODE, LEAD STORAGE BATTERY, AND POWER STORAGE SYSTEM**

(30) Priority: 30.11.2020 JP 2020199110
(71) Applicant: FURUKAWA ELECTRIC CO., LTD., Chiyoda-ku Tokyo 100-8322 (JP); The Furukawa Battery Co., Ltd., Yokohama-shi, Kanagawa-ken 240-0006 (JP)
(72) Inventor: KANEKO, Hiroshi, Tokyo 100-8322 (JP); YAMAUCHI, Miho, Tokyo 100-8322 (JP); OGIWARA, Yoshiaki, Tokyo 100-8322 (JP); FURUKAWA, Jun, Jyoban-shimofunao-machi, Iwaki-shi, Fukushima 972- 8501 (JP); YAMADA, Keizo, Jyoban-shimofunao-machi, Iwaki-shi, Fukushima 972- 8501 (JP); KOIDE, Ayano, Jyoban-shimofunao-machi, Iwaki-shi, Fukushima 972- 8501 (JP); SATO, Atsushi, Jyoban-shimofunao-machi, Iwaki-shi, Fukushima 972- 8501 (JP)
(74) Representative: Grünecker Patent- und Rechtsanwälte PartG mbB
(86) International application number: PCT/JP2021/041245
(87) International publication number: WO 2022/113730

(57) **Abstract**

Provided is a lead alloy usable to manufacture a lead storage battery electrode the growth of which is easily predictable. The diffraction intensity in a crystal orientation {211} <111> in a pole figure created by analyzing the surface of the lead alloy by an X-ray diffraction method is five times or less of the diffraction intensity in a random orientation in a pole figure created by analyzing powder of pure lead by the X-ray diffraction method.

## Description

### Technical Field

The present invention relates to a lead alloy, a lead storage battery electrode, a lead storage battery, and a power storage system.

### Background Art

An electrode of a lead storage battery includes an electrode lead layer made of a lead alloy, and an active material disposed on the surface of the electrode lead layer. In a case where the thickness of the electrode lead layer is restrained to efficiently use the internal volume of the lead storage battery, extension (growth) of the electrode lead layer easily occurs along with volume expansion of lead oxide generated by corrosion, due to a shortage in the strength of the electrode lead layer. This might cause disconnection in an electrically joined portion between a positive electrode and a negative electrode or peeling of the active material from the electrode lead layer, thereby resulting in that the battery performance might decrease.

### Citation List

### Patent Literature

PTL 1: JP 05-290855 A
PTL 2: JP 05-290857 A
PTL 3: JP 07-65822 A

### Summary of Invention

### Technical Problem

In order to deal with the growth, there is a case where a "margin" is designed in the structure of the lead storage battery so that the extension of the electrode lead layer is allowable. However, in a case where the crystalline structure of a lead alloy to form the electrode lead layer has anisotropy (for example, see PTLS 1 to 3), it is difficult to predict a direction where the electrode lead layer extends or the amount of the extension, and therefore, there is such a problem that the design of the structure of the lead storage battery becomes complicated. In a case where the growth is hard to be predicted as described above, it is difficult to design the structure of the lead storage battery with accuracy, and therefore, there is such a risk that the lead storage battery might easily break down due to deformation of the electrode that is caused by the growth.

In view of this, an object of the present invention is to provide a lead storage battery electrode the growth of which is easily predictable. Further, another object of the present invention is to provide a lead alloy usable to manufacture a lead storage battery electrode the growth of which is easily predictable. Further another object of the present invention is to provide a lead storage battery and a power storage system each of which can design the structure of a lead storage battery with accuracy and each of which is hard to break down due to deformation of an electrode that is caused by growth.

### Solution to Problem

A lead alloy according to one aspect of the present invention is a lead alloy in which the diffraction intensity in a crystal orientation {211} <111> in a pole figure created by analyzing the surface of the lead alloy by an X-ray diffraction method is five times or less of the diffraction intensity in a random orientation in a pole figure created by analyzing powder of pure lead by the X-ray diffraction method.

Further, a lead storage battery electrode according to another aspect of the present invention includes an electrode lead layer made of the lead alloy according to the one aspect, and an active material disposed on the surface of the electrode lead layer.

Further, a lead storage battery according to further another aspect of the present invention includes the lead storage battery electrode according to the above-described another aspect.

Further, a power storage system according to still another aspect of the present invention includes the lead storage battery according to the further another aspect and is configured to store electricity in the lead storage battery.

### Advantageous Effects of Invention

With the lead storage battery electrode according to the present invention, growth is easily predictable. Further, with the lead alloy according to the present invention, a lead storage battery electrode the growth of which is easily predictable is manufacturable. Further, with the lead storage battery and the power storage system according to the present invention, it is possible to design the structure of the lead storage battery with accuracy, and failure due to deformation of an electrode to be caused by growth is hard to occur.

### Brief Description of Drawings

FIG. 1 is a sectional view to describe a structure of a bipolar lead storage battery according to one embodiment of a lead storage battery according to the present invention; and
FIG. 2 is a view to describe one embodiment of a power storage system according to the present invention.

### Description of Embodiments

One embodiment of the present invention will be described. Note that the embodiment described below describes an example of the present invention. Further, various changes or improvements can be added to the present embodiment, and embodiments with the changes or improvements can be also included in the present invention.

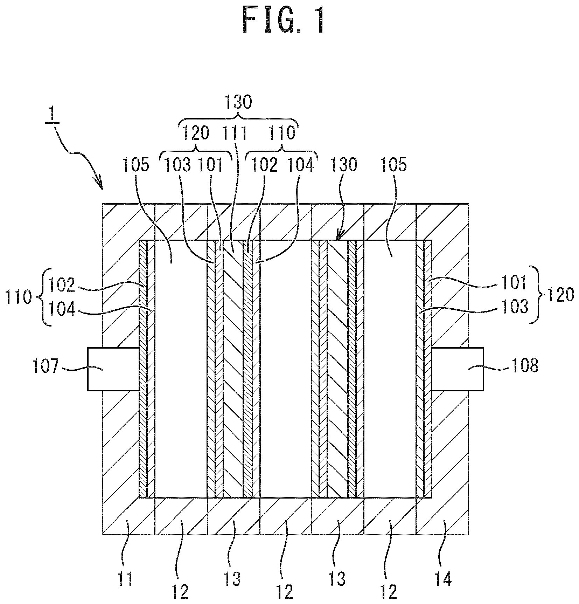

A structure of a lead storage battery 1 according to one embodiment of the present invention will be described with reference to FIG. 1. The lead storage battery 1 illustrated in FIG. 1 is a bipolar lead storage battery and includes first plate units each including a negative electrode 110 fixed to a first plate 11 having a flat-plate shape, second plate units each including an electrolytic layer 105 fixed to the inside of a second plate 12 having a frame-plate shape, a third plate unit including a bipolar electrode 130 fixed to the inside of a third plate 13 having a frame-plate shape, the bipolar electrode 130 including a positive electrode 120 formed on one surface of a substrate 111 and a negative electrode 110 formed on the other surface of the substrate 111, and a fourth plate unit including a positive electrode 120 fixed to a fourth plate 14 having a flat-plate shape.

When the second plate units and the third plate units are alternately laminated on one another between the first plate unit and the fourth plate unit, the lead storage battery 1 having a generally rectangular solid shape is formed. The number of the second plate units to be laminated and the number of the third plate units to be laminated are set such that the power storage capacity of the lead storage battery 1 has a desired value.

The first to fourth plates 11, 12, 13, 14 and the substrates 111 are made of well-known molding resin, for example. The first to fourth plates 11, 12, 13, 14 are fixed to each other by an appropriate method such that the inside of the lead storage battery 1 is sealed to prevent an electrolytic solution from flowing outside.

A negative terminal 107 is fixed to the first plate 11, and the negative electrode 110 fixed to the first plate 11 is electrically connected to the negative terminal 107.

A positive terminal 108 is fixed to the fourth plate 14, and the positive electrode 120 fixed to the fourth plate 14 is electrically connected to the positive terminal 108.

The electrolytic layer 105 is constituted by a glass-fiber mat impregnated with an electrolytic solution containing sulfuric acid, for example.

The negative electrode 110 includes a negative lead layer 102 made of a well-known copper foil, for example, and a negative active material layer 104 disposed on the surface of the negative lead layer 102.

The positive electrode 120 includes a positive lead layer 101 (corresponding to an "electrode lead layer" as a constituent feature of the present invention) made of a foil of a lead alloy according to the present embodiment (described later), and a positive active material layer 103 disposed on the surface of the positive lead layer 101.

The positive electrode 120 and the negative electrode 110 are fixed to a front surface and a back surface of the substrate 111, respectively, and are electrically connected thereto by an appropriate method. Alternatively, each of the positive electrode 120 and the negative electrode 110 may be fixed to one surface of each of two substrates 111, and the other surfaces of the two substrates 111 may be electrically connected and fixed to each other.

In the lead storage battery 1 according to the present embodiment with such a configuration, the bipolar electrode 130 as a lead storage battery electrode is constituted by the substrate 111, the positive lead layer 101, the positive active material layer 103, the negative lead layer 102, and the negative active material layer 104. A bipolar electrode is a single electrode having functions both as a positive electrode and a negative electrode.

Further, the lead storage battery 1 according to the present embodiment has a battery configuration in which cell members are connected in series to each other by assembling the cell members such that the cell members are laminated alternately, the cell members being each configured such that the electrolytic layer 105 is provided between the positive electrode 120 including the positive active material layer 103 and the negative electrode 110 including the negative active material layer 104.

Note that the present embodiment deals with a bipolar lead storage battery including a bipolar electrode as a single electrode having both functions as a positive electrode and a negative electrode, as an example of the lead storage battery, but the lead storage battery according to the present embodiment may be a lead battery including electrodes having a function as a positive electrode and electrodes having a function as a negative electrode separately such that positive electrodes and negative electrodes as different bodies are disposed alternately.

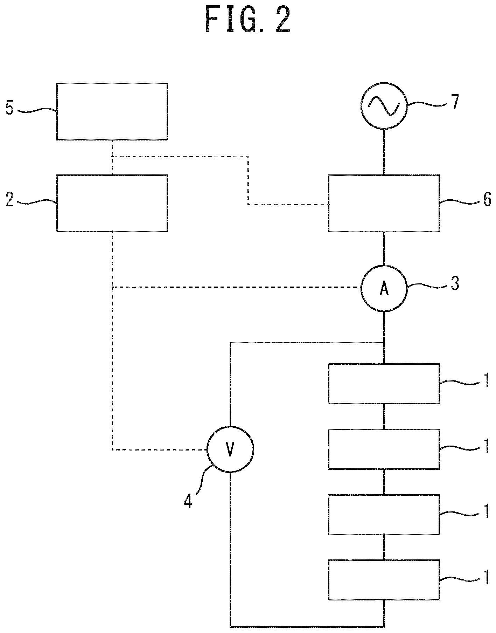

A power storage system can be constituted by using the lead storage battery 1 according to the present embodiment illustrated in FIG. 1. An example of the power storage system is illustrated in FIG. 2. The power storage system in FIG. 2 includes an assembled battery including a plurality of lead storage batteries 1, 1, ... (four lead storage batteries in the example of FIG. 2) connected in series to each other, an AC-DC converter 6 configured to perform AC-DC conversion (conversion between alternating-current power and direct-current power) at the time of charge and discharge of the assembled battery, a current sensor 3 provided between the assembled battery and the AC-DC converter 6 and configured to measure a charge-discharge current at the time of charge and discharge of the assembled battery, a voltage sensor 4 configured to measure the voltage of the assembled battery, a storage-state monitoring device 2 configured to receive measurement data transmitted from the current sensor 3 and the voltage sensor 4 and perform a state determination on the assembled battery and a warning determination based on the measurement data thus received, and an energy management system 5 configured to receive storage-stage information transmitted from the storage-state monitoring device 2 based on a result of the state determination or the warning determination thus performed and determine whether the assembled battery is charged or discharged based on the storage-state information thus received.

The energy management system 5 determines whether the assembled battery is charged or discharged, based on the storage-state information received from the storage-state monitoring device 2, and transmits a signal to instruct execution of charge or discharge to the AC-DC converter 6. In a case where the AC-DC converter 6 receives a signal to instruct execution of discharge, the AC-DC converter 6 converts direct-current power discharged from the assembled battery into alternating-current power and outputs the alternating-current power into a commercial power system 7. In the meantime, in a case where the AC-DC converter 6 receives a signal to instruct execution of charge, the AC-DC converter 6 converts alternating-current power input from the commercial power system 7 into direct-current power and charges the assembled battery. Note that the number of the lead storage batteries 1 connected in series is determined by an input voltage range of the AC-DC converter 6.

### <Lead alloy constituting positive lead layer 101>

Next will be described a foil of a lead alloy constituting the positive lead layer 101. The foil is made of a lead alloy according to the present embodiment. The lead alloy according to the present embodiment is a lead alloy in which the diffraction intensity in a crystal orientation {211} <111> in a pole figure created by analyzing the surface of the lead alloy by an X-ray diffraction method is five times or less of the diffraction intensity in a random orientation in a pole figure created by analyzing powder of pure lead by the X-ray diffraction method.

In other words, when Ic indicates the diffraction intensity in the crystal orientation {211} <111> in the pole figure created by analyzing the surface of the lead alloy according to the present embodiment by the X-ray diffraction method, and Ir indicates the diffraction intensity in the random orientation in the pole figure created by analyzing powder of pure lead by the X-ray diffraction method, a diffraction intensity ratio Ic/Ir between them is 5 or less. It is necessary that the diffraction intensity ratio Ic/Ir be 5 or less, but the diffraction intensity ratio Ic/Ir is preferably 4 or less, more preferably 2 or less, and further preferably 1 or less. Further, the diffraction intensity ratio Ic/Ir is preferably 0.01 or more.

Since this lead alloy has a small number of crystal orientations {211} <111>, its crystalline structure has a small anisotropy. The magnitude of deformation resistance varies depending on crystal orientation, and therefore, it is difficult to predict extension due to growth in a material with a crystalline structure having a large anisotropy, but the lead alloy according to the present embodiment has a small anisotropy, and therefore, the direction where the positive lead layer 101 extends due to growth or the amount of the extension are easy predictable (that is, the growth is easily predictable). Since the growth to be caused in the positive lead layer 101 is easily predictable, the design of the structure (margin) of the lead storage battery 1 can be simplified, thereby making it possible to design the structure of the lead storage battery 1 with accuracy. As a result, the lead storage battery 1 is hard to break down due to deformation of the positive electrode 120 to be caused by growth.

Examples of the crystal orientation {211} <111> can include rolling orientation. In a case where the foil of the lead alloy to constitute the positive lead layer 101 is manufactured by use of rolling, a crystal orientation (rolling orientation) parallel to a rolling direction develops by rolling, but when a rolling condition is selected appropriately, it is possible to make the diffraction intensity ratio Ic/Ir equal to or less than 5 by controlling the amount of the rolling orientation {211} <111>. An example of a method for manufacturing the foil of the lead alloy according to the present embodiment by use of rolling will be described later in detail.

Note that the present embodiment deals with, as an example, the lead storage battery 1 in which the positive lead layer 101 is made of the foil of the lead alloy according to the present embodiment, and the negative lead layer 102 is made of a well-known lead foil, but reversely to this example, the positive lead layer 101 may be made of a well-known lead foil, and the negative lead layer 102 may be made of the foil of the lead alloy according to the present embodiment, or the positive lead layer 101 and the negative lead layer 102 may be both made of the foil of the lead alloy according to the present embodiment.

### <Alloy composition of lead alloy>

Next will be described the alloy composition of the lead alloy according to the present embodiment. The lead alloy according to the present embodiment may be a lead alloy containing tin of 0.4% by mass or more but 2% by mass or less and bismuth of 0.004% by mass or less with the balance of lead and unavoidable impurities. Alternatively, the lead alloy according to the present embodiment may be a lead alloy containing tin of 0.4% by mass or more but 2% by mass or less, bismuth of 0.004% by mass or less, and at least one of calcium of 0.1% by mass or less, silver of 0.05% by mass or less, and copper of 0.05% by mass or less with the balance of lead and unavoidable impurities. The alloy compositions as described above can easily provide a lead alloy having a crystalline structure with a small anisotropy.

When the lead alloy contains tin, an excellent adhesion property is achieved between the positive lead layer 101 made of the lead alloy and the positive active material layer 103. However, when the lead alloy contains a large amount of tin, intergranular corrosion susceptibility becomes higher, so that the positive lead layer 101 tends to easily deteriorate. Therefore, the content of tin in the lead alloy is preferably 0.4% by mass or more but 2.0% by mass or less, and more preferably 0.6% by mass or more but 1.8% by mass or less. Further, when the lead alloy contains calcium, silver, or copper, the lead alloy has minute crystal grains. Accordingly, when the lead alloy contains tin and at least one of calcium, silver, and copper, it is possible to yield an effect that the strength of the lead alloy is raised and the lead alloy is hard to deform.

Note that calcium, silver, and copper may be added to the lead alloy positively, but even if they are not added positively, they may be contained as unavoidable impurities due to mixing from base metal or the like. Respective maximum amounts of calcium, silver, and copper that can be contained as the unavoidable impurities are 0.012% by mass.

Meanwhile, when the lead alloy contains bismuth, moldability of the lead alloy by rolling or the like tends to decrease. That is, bismuth is one of impurities that are preferably not contained in the lead alloy according to the present embodiment as much as possible. Therefore, the content of bismuth in the lead alloy is preferably 0.004% by mass or less, and most preferably 0% by mass. However, in consideration of the cost of the lead alloy, the content of bismuth is preferably 0.0004% by mass or more.

In the meantime, the lead alloy may contain an element other than lead, tin, calcium, silver, copper, and bismuth. This element is an impurity contained in the lead alloy unavoidably, and the total content of the element other than lead, tin, calcium, silver, copper, and bismuth in the lead alloy is preferably 0.01% by mass or less, and most preferably 0% by mass.

### <Control method of crystalline structure of lead alloy>

Next will be described a method for manufacturing the foil of the lead alloy to constitute the positive lead layer 101 by rolling and a heat treatment with reference to an example. When the foil of the lead alloy is manufactured by rolling after the heat treatment, it is possible to control the crystalline structure of the lead alloy and to reduce the amount of the crystal orientation {211} <111>. Note that the rolling and the heat treatment are just examples of a control method of controlling the crystalline structure in the lead alloy according to the present embodiment (a reduction method of reducing the amount of the crystal orientation {211} <111>), and the crystalline structure may be controlled by a method other than the rolling and the heat treatment.

The foil of the lead alloy to constitute the positive lead layer 101 is manufactured by first performing the heat treatment on the lead alloy and then performing rolling on the lead alloy. This heat treatment is performed such that, after a heat treatment at a first stage, a heat treatment at a second stage to maintain a predetermined temperature for a predetermined period of time is performed without cooling to a room temperature.

As the condition of the rolling, the rolling reduction ratio is preferably 80% or less, and more preferably 60% or less.

As the condition of the heat treatment at the first stage, the temperature is preferably 290°C or more but 320°C or less, and more preferably 295°C or more but 310°C or less.

As the condition of the heat treatment at the second stage, the temperature is preferably 150°C or more but 250°C or less, and more preferably 170°C or more but 230°C or less, and the heat treatment time is preferably two weeks or more, and more preferably three weeks or more.

By the series of treatments, it is possible to reduce the amount of the crystal orientation {211} <111> and further to maintain a formed crystalline structure by a deposit formed moderately. When the temperature of the heat treatment is too low, the nuclear density of the deposit rises excessively and the crystal orientation {211} <111> is easily formed, but, when the temperature of the heat treatment is high, the deposit is hard to be formed, and the formed crystalline structure tends to be hard to be maintained stably.

### [Examples]

The following further describes the present invention in detail with reference to examples and comparative examples. Foils were each manufactured by performing the heat treatment on an ingot having a thickness of 8 mm and made of a lead alloy having an alloy composition shown in Table 1 and then performing rolling on the ingot. The condition of the heat treatment was that an ingot heated to 300°C was put into a furnace maintained at a predetermined heat treatment temperature and maintained for a predetermined heat treatment time without cooling the ingot to a room temperature. Heat treatment temperatures and heat treatment times were set as shown in Table 1.

Note that the condition of a heat treatment in Comparative Example 1 is that only heating to 300°C (the heat treatment at the first stage) is performed, and a subsequent heat treatment using a furnace (the heat treatment at the second stage) is not performed.

The condition of the rolling is that an ingot having a thickness of 8 mm is rolled to manufacture a foil having a thickness of 0.25 mm. The rolling reduction ratio of this rolling is 96.9%. Note that, in Comparative Example 5, a defect called an edge crack occurred in an end portion of a plate during the rolling, and therefore, no foil was obtained.

**[Table 1]**

| | | Alloy composition (% by mass) | | | | | | Heat treatment | | Diffraction intensity ratio | Growth amount ratio |
|---|---|---|---|---|---|---|---|---|---|---|---|
| | | Sn | Ca | Ag | Cu | Bi | Pb | Temperature (°C) | Time | | |
| Ex. | 1 | 2.1 | 0.09 | 0 | 0 | 0.002 | Balance | 200 | Two weeks | 1 | OK |
| | 2 | 0.3 | 0.09 | 0 | 0 | 0.002 | Balance | 200 | Two weeks | 1 | OK |
| | 3 | 1.7 | 0.11 | 0 | 0 | 0.002 | Balance | 200 | Two weeks | 4 | OK |
| | 4 | 1.7 | 0.09 | 0 | 0.053 | 0.002 | Balance | 200 | Two weeks | 3 | OK |
| | 5 | 1.7 | 0.09 | 0 | 0 | 0.002 | Balance | 200 | Two weeks | 1 | OK |
| | 6 | 1.4 | 0.06 | 0 | 0 | 0.002 | Balance | 200 | Two weeks | 1 | OK |
| | 7 | 1.1 | 0.02 | 0 | 0 | 0.002 | Balance | 200 | Two weeks | 1 | OK |
| | 8 | 1.1 | 0 | 0.052 | 0 | 0.002 | Balance | 200 | Two weeks | 3 | OK |
| | 9 | 1.1 | 0 | 0.035 | 0 | 0.002 | Balance | 200 | Two weeks | 1 | OK |
| | 10 | 1.1 | 0 | 0 | 0.03 | 0.002 | Balance | 200 | Two weeks | 1 | OK |
| | 11 | 1.1 | 0 | 0 | 0 | 0.002 | Balance | 200 | Two weeks | 1 | OK |
| | 12 | 1.7 | 0.09 | 0 | 0 | 0.002 | Balance | 160 | Two weeks | 2 | OK |
| | 13 | 1.7 | 0.09 | 0 | 0 | 0.002 | Balance | 240 | Two weeks | 2 | OK |
| | 14 | 1.7 | 0.09 | 0.01 | 0 | 0.002 | Balance | 200 | Two weeks | 1 | OK |
| | 15 | 1.7 | 0.09 | 0 | 0.01 | 0.002 | Balance | 200 | Two weeks | 1 | OK |
| | 16 | 1.7 | 0.09 | 0 | 0 | 0.002 | Balance | 200 | One day | 5 | OK |
| Comp. Ex. | 1 | 1.7 | 0.09 | 0 | 0 | 0.002 | Balance | Not performed | - | 7 | NG |
| | 2 | 1.7 | 0.09 | 0 | 0 | 0.002 | Balance | 200 | Two hours | 7 | NG |
| | 3 | 1.7 | 0.09 | 0 | 0 | 0.002 | Balance | 130 | Two weeks | 6 | NG |
| | 4 | 1.7 | 0.09 | 0 | 0 | 0.002 | Balance | 270 | Two weeks | 7 | NG |
| | 5 | 1.7 | 0.09 | 0 | 0 | 0.010 | Balance | 200 | Two weeks | - | - |

Subsequently, respective surfaces (rolled surfaces) of the foils manufactured in Examples 1 to 16 and Comparative Examples 1 to 4 were analyzed by the X-ray diffraction method, and pole figures were created based on the results. More specifically, Θ/2Θ measurement was performed by use of an X-ray diffractometer X'pert PRO made by Spectris Co., Ltd. to find respective positions of (100) peak, (111) peak, and (110) peak, and pole measurement was performed based on the peak positions. For improvement of the workability, the measurement was performed in a state where a foil was attached to a glass foil.

In the measurement, a Cu target was used and an X-ray opening was set to 5 mm × 5 mm. The Θ/2Θ measurement was performed at an output of 45 kW, 40 mA, and a scan step of 0.008°, and the pole measurement was performed at an output of 45 kW, 40 mA, and a scan step of 5°. Then, a pole figure was created based on measurement data by use of analysis software X'pert Texture made by Spectris Co., Ltd., and the diffraction intensity of a crystal orientation {211} <111> in the pole figure was found.

Further, the surface of powder of pure lead (powder of pure lead made by The Nilaco Corporation, the degree of purity is 99.999%) in a random orientation state was analyzed by the X-ray diffraction method, and a pole figure was created based on the result similarly to the above. The diffraction intensity of the random orientation in the pole figure was found. The found diffraction intensity of the crystal orientation {211} <111> was divided by the diffraction intensity of the random orientation to calculate a diffraction intensity ratio. Results are shown in Table 1.

Subsequently, each of the foils in Examples 1 to 16 and Comparative Examples 1 to 4 was cut to manufacture three test pieces having a width of 50 mm and a length of 50 mm. After a corrosion test was performed such that a current was applied to the test pieces at a constant potential of 1300 mV and maintained for eight weeks, the deformation amount of each test piece in the rolling direction and the deformation amount thereof in a direction perpendicular to the rolling direction were measured. Note that the average value of measurement results of three test pieces was regarded as the deformation amount of the test pieces. Then, based on a value (hereinafter referred to as a "growth amount ratio") obtained by dividing the deformation amount of the test piece in the rolling direction by the deformation amount thereof in the direction perpendicular to the rolling direction, how easily growth anisotropy occurs was evaluated. Results are shown in Table 1.

In Table 1, when a foil has a growth amount ratio less than 1.3, the foil is determined to be a foil in which growth anisotropy is hard to occur and is evaluated as "OK" in Table 1, and when a foil has a growth amount ratio of 1.3 or more, the foil is determined to be a foil in which growth anisotropy easily occurs and is evaluated as "NG" in Table 1. Note that a growth amount ratio of 1.3 is a growth amount ratio in Comparative Example 1 as a conventional example.

When a foil has a growth amount ratio of less than 1.3, it can be said that growth anisotropy is hard to occur in the foil, the direction where the positive lead layer extends due to growth or the amount of the extension is easily predictable (that is, the growth is easily predictable), and the design of the structure (margin) of the lead storage battery can be simplified, thereby making it possible to design the structure of the lead storage battery with accuracy.

From the results shown in Table 1, the foils of Examples 1 to 16 have diffraction intensities of 5 or less, and therefore, it is found that growth anisotropy is hard to occur. In the meantime, the foils of Comparative Examples 1 to 4 have diffraction intensities of more than 5, and therefore, it is found that growth anisotropy occurs. Further, as the diffraction intensity ratio is smaller, the growth amount ratio tends to approach 1.

### Reference Signs List

- 1: lead storage battery
- 101: positive lead layer
- 102: negative lead layer
- 103: positive active material layer
- 104: negative active material layer
- 105: electrolytic layer
- 110: negative electrode
- 111: substrate
- 120: positive electrode
- 130: bipolar electrode

## Claims

1. A lead alloy in which a diffraction intensity in a crystal orientation {211} <111> in a pole figure created by analyzing a surface of the lead alloy by an X-ray diffraction method is five times or less of a diffraction intensity in a random orientation in a pole figure created by analyzing powder of pure lead by the X-ray diffraction method.

2. The lead alloy according to claim 1, comprising:
tin of 0.4% by mass or more but 2% by mass or less and bismuth of 0.004% by mass or less with a balance of lead and unavoidable impurities.

3. The lead alloy according to claim 1, comprising:
tin of 0.4% by mass or more but 2% by mass or less, bismuth of 0.004% by mass or less, and at least one of calcium of 0.1% by mass or less, silver of 0.05% by mass or less, and copper of 0.05% by mass or less with a balance of lead and unavoidable impurities.

4. A lead storage battery electrode comprising:
an electrode lead layer made of the lead alloy according to any one of claims 1 to 3; and
an active material disposed on a surface of the electrode lead layer.

5. The lead storage battery electrode according to claim 4, wherein the lead storage battery electrode is used for a bipolar lead storage battery.

6. A lead storage battery comprising the lead storage battery electrode according to claim 4 or 5.

7. A power storage system comprising the lead storage battery according to claim 6, wherein the power storage system is configured to store electricity in the lead storage battery.
